# EUROPEAN PATENT SPECIFICATION

(11) **EP 2 711 223 B1**
(45) Date of publication and mention of the grant of the patent: **15.07.2015**
(21) Application number: 13185663.5
(22) Date of filing: 24.09.2013
(51) Int. Cl.: B60K 5/12, B60K 5/04

(54) **Power unit mounting apparatus**
Aufhängungsvorrichtung für eine Antriebseinheit
Dispositif de support pour une unité de propulsion

(30) Priority: 24.09.2012 JP 2012209375
(43) Date of publication of application: 26.03.2014
(73) Proprietor: Mitsubishi Jidosha Kogyo K.K., Tokyo 108-8410 (JP)
(72) Inventor: Akimoto, Yasuo, Tokyo, 108-8410 (JP)
(74) Representative: Vossius & Partner Patentanwälte Rechtsanwälte mbB

(56) References cited:
- EP-A1- 1 870 317
- US-A- 5 450 922
- US-A- 5 685 599

## Description

### Technical Field

The present invention relates to a mounting apparatus for elastically supporting a power unit of a vehicle.

### Background Art

In vehicles such as passenger cars, an engine compartment is formed in an area at the front of a passenger compartment of the vehicle, so that a power unit is accommodated transversely in the engine compartment. Most of the power units are configured as a structure in which, for example, an engine, a transmission and the like are directly connected (coupled) together in a vehicle transverse direction, and therefore, a construction is required on a mount for such a power unit which suppresses the transmission of vibration to a vehicle body from the engine and the transmission. Because of this, a front portion of the engine and a rear portion of the transmission which are positioned at transverse side portions of the engine compartment are elastically supported on constituent members of the vehicle body which make up the engine compartment, for example, side frame members which extend in a front-to-rear or longitudinal direction of the vehicle body by using a mounting construction employing an insulator, whereby the transmission of vibration from the engine and the transmission to the vehicle body is suppressed.

For many of these mounting apparatuses which employ the insulator, a construction is adopted in which pin portions which project transversely outwards are mounted at the transverse end portions of the power unit such as the front portion of the engine and the rear portion of the transmission, and insulators are mounted on the side frame members at the transverse sides of the engine compartment, so that the pin portions are press fitted in cylindrical portions which are formed in the insulators so as to penetrate therethrough in the transverse direction so as to support the power unit at the ends thereof (refer to Patent Literatures 1, 2). Namely, the power unit is supported within the engine compartment in such a state that vibration transmitted through the pin portions is absorbed by the insulators so as to suppress the transmission of vibration from the power unit to the vehicle body side (the side frame members).

Incidentally, when collision load is applied to the power unit which is supported at the transverse end portions thereof from one transverse side of the vehicle body as a result of the vehicle being involved in a frontal offset collision (as a result of the vehicle being involved in an offset collision), the power unit is pushed to be displaced towards the rear of the vehicle body (towards the passenger compartment) while rotating. Namely, in the frontal offset collision, since one of the transverse sides of the power unit is pushed to the rear, the power unit is rotationally displaced towards the passenger compartment which is situated to the rear of the power unit while rotating on the mounting portion on the non-colliding side thereof. Then, the colliding side end portion of the power unit and the insulator are displaced relatively in a direction in which they are separated from each other, and therefore, the pin portion at the colliding side of the power unit also follows the movement of the power unit in the rotational direction and is displaced in a direction in which the pin portion is dislocated from the cylindrical portion in the insulator.

Because of this, when the vehicle is involved in a frontal offset collision, with the pin portion and the cylindrical portion fixed to each other by depending only upon the press fitting, there are fears that the pin portion is dislocated from the inside of the cylindrical portion in an early stage of the collision. When the pin portion is dislocated from the cylindrical portion, it follows that the end portion at the colliding side of the power unit comes off from the engine compartment (the vehicle body). In the event that the power unit comes off in the early stage of the collision, the colliding load applied to the power unit cannot be absorbed only by the side frame members, whereby the load cannot be controlled, resulting in an increased possibility of the power unit coming into interference with the passenger compartment.

Then, as countermeasures against this problem, conventionally, as also disclosed in Patent Literatures 1, 2, a dislocation preventive device is provided at a distal end portion of the pin member, that is, for example, a bolt member or a nut member whose outside diameter is larger than an outside diameter of the pin member is assembled to the distal end portion of the pin member, so as to prevent the dislocation of the pin member from the inside of the cylindrical portion by the part so assembled which functions to prevent the dislocation of the pin member. By doing so, the power unit is controlled so as not to come off in the early stage of the collision.

A power unit mounting apparatus according to the preamble of claim 1 is known from US-A- 5 450 922.

### Related Art Literature

### Patent Literature

[Patent Literature 1] JP-A-3-182837
[Patent Literature 2] JP-A-10-299833

### Summary of Invention

### Technical Problem

In the construction in which the separate bolt member or nut member is used as the dislocation preventive device, however, not only is the bolt member or the nut member prepared separately, but also the screwing work is necessary in which the nut member or the bolt member is screwed into the pin portion after the pin portion is inserted through the cylindrical portion. Thus, many man-hours are required until the apparatus is established which prevents the dislocation of the pin member. This leads to a problem that the production costs are increased.

It is therefore an object of the invention to provide a power unit mounting apparatus in which when a vehicle is involved in a collision, a pin portion is prevented from being dislocated from the inside of a cylindrical portion in an early stage of the collision by a simple and inexpensive construction.

### Solution to Problem

According to the invention, there is provided a power unit mounting apparatus for supporting both transverse end portions of a power unit (5) in a vehicle transverse direction to side frames (1 a, 1 b) of a vehicle body (2), the power unit mounting apparatus comprising:
a pin portion (18), provided at an end portion of the power unit (5) in the vehicle transverse direction, and projecting outward in the vehicle transverse direction; and
an insulator (11) elastically supporting the pin portion (18),
wherein a cylindrical portion (14) through which the pin portion (18) is inserted is provided in the insulator (11), and
wherein a claw-shaped portion (25) is formed at a distal end portion of the pin portion (18).

The pin portion (18) may be formed so as to be disposed outward in the vehicle transverse direction than the cylindrical portion (14) in a state where the pin portion (18) is inserted through the cylindrical portion (14).

The claw-shaped portion (25) may be configured to be engaged with an outer edge portion of the cylindrical portion (14) in the vehicle transverse direction when the pin portion (18) and the insulator (11) are relatively displaced so as to separate from each other in a collision of the vehicle.

The power unit mounting apparatus may be configured such that: the claw-shaped portion (25) includes a projecting portion (27); and a distal end portion of the projecting portion (27) projects in a vehicle longitudinal direction within a range of a radial section of the pin portion (18).

The power unit mounting apparatus may be configured such that: a recess portion (28) is formed in the claw-shaped portion (25) at an inner portion with respect to a base portion of the projecting portion (27) in the vehicle transverse direction; and a depth of the recess portion (28) is increased towards the projecting portion (27).

The power unit mounting apparatus may be configured such that: a tapered portion (18a) in which an outside diameter thereof is decreased towards a distal end of the pin portion (18) is provided at a distal end portion of the pin portion (18); and an outer surface of the projecting portion (27) and an inner surface of the recess portion (28) are formed so as to continue to the tapered portion (18a).

The pin portion (18) may be press fitted into the cylindrical portion (14).

### Advantageous Effects of Invention

According to the invention, when the vehicle is involved in a collision to thereby displace relatively the pin portion and the insulator in the directions in which they are separated from each other, the claw-shaped portion of the pin portion is brought into locking engagement with the transversely outer edge portion of the cylindrical portion, whereby the pin portion is prevented from being dislocated from the cylindrical portion in an early stage of the collision. Consequently, the necessities of preparation of a separate part and assembling work of the separate part are obviated. In addition, the pin portion can be prevented from being dislocated from the inside of the cylindrical portion in the early stage of the collision only by forming the claw-shaped portion at the distal end portion of the pin portion. Further, the power unit can be prevented from coming off in the early stage of the collision, thereby making it possible to control the timing at which the power unit comes off.

According to the invention, the easy insertion of the pin portion into the inside of the cylindrical portion can also be ensured. According to the invention, the claw-shaped portion can be realized by the simple construction in which only the projecting portion and the recess portion are formed on the pin portion. According to the invention, the dislocation of the pin portion can be prevented without deteriorating the easy insertion of the pin portion into the cylindrical portion which is provided by the tapered portion.

### Brief Description of Drawings

Fig. 1 is a plan view showing a power unit mounting apparatus according an embodiment of the invention.
Fig. 2 is a perspective view showing the construction of the mounting apparatus which supports an engine of the power unit according to the embodiment of the invention.
Fig. 3 is an exploded perspective view showing constructions of respective portions of the mounting apparatus according to the embodiment of the invention.
Fig. 4 is a plan view illustrating a behavior of the mounting apparatus when a vehicle is involved in a frontal offset collision.
Fig. 5 is a plan view showing a condition in which the dislocation of a pin portion is prevented when the vehicle is involved in the frontal offset collision.
Fig. 6 is a sectional view taken along the line A-A in Fig. 2, showing a claw-shaped portion formed at a distal end portion of the pin portion.
Fig. 7 is an enlarged sectional view of a portion B in Fig. 5, illustrating a condition in which the claw-shaped portion is brought into locking engagement with an edge portion of a cylindrical portion when the vehicle is involved in a frontal offset collision.

### Description of Embodiments

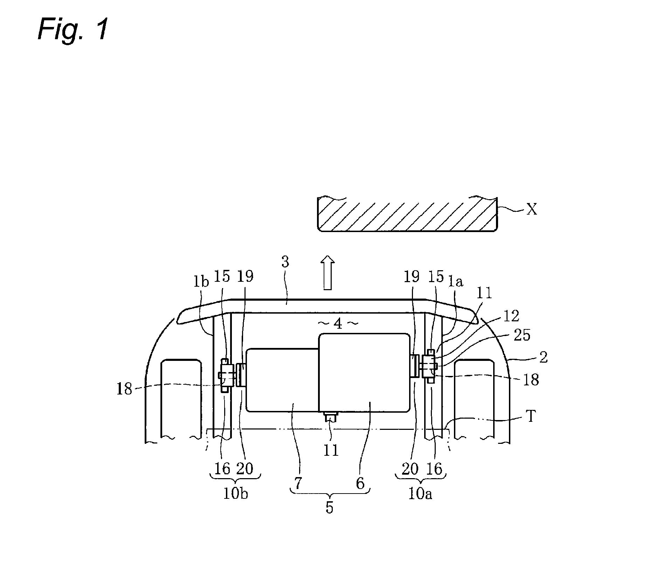

Hereinafter, the invention will be described based on an embodiment shown in Figs. 1 to 7. Fig. 1 is shows a plan view of a front portion of a vehicle body of a vehicle or a passenger car. To describe briefly the front portion of the vehicle body, in the figure, reference numerals 1 a, 1 b denote a pair of side frame members (members extending in a longitudinal direction of the vehicle body) which makes up the vehicle body 2, and reference numeral 3 denotes a cross member (a member extending in a vehicle transverse direction) which is provided to extend between front end portions of the side frame member 1 a, 1b in such a way as to intersect them.

An engine compartment 4 (an accommodation area) is formed in an area at the front of a passenger compartment T which expands from the cross member 3, which constitutes a frontmost portion of the vehicle body, to a dashboard which defined the passenger compartment T at the center of the vehicle. A vehicle running power unit 5 is accommodated in this engine compartment 4. The power unit 5 is, for example, a structure in which a transmission 7 is connected in series with an output portion of a multi-cylinder reciprocating engine 6. The whole of the power unit 5 is accommodated (transversely) within the engine compartment 4 in a transversely oriented attitude in which the engine 6 is disposed at one transverse side and the transmission 7 is disposed at an opposite side or the other transverse side of the engine compartment 4.

Transverse end portions of the power unit 5 are mounted on the vehicle body 2 via an engine side mounting apparatus 10a and a transmission side mounting apparatus 10b (both corresponding to a mounting apparatus of the present patent application), respectively. Incidentally, a middle portion of the power unit 5 is fixed to the vehicle body via roll rod member 11 which is adapted to suppress the rolling of the power unit 5. The engine side mounting apparatus 10a and the transmission side mounting apparatus 10b both have the same construction, and therefore, taking the engine side mounting apparatus 10a for example herein, the construction of the mounting apparatus will be described.

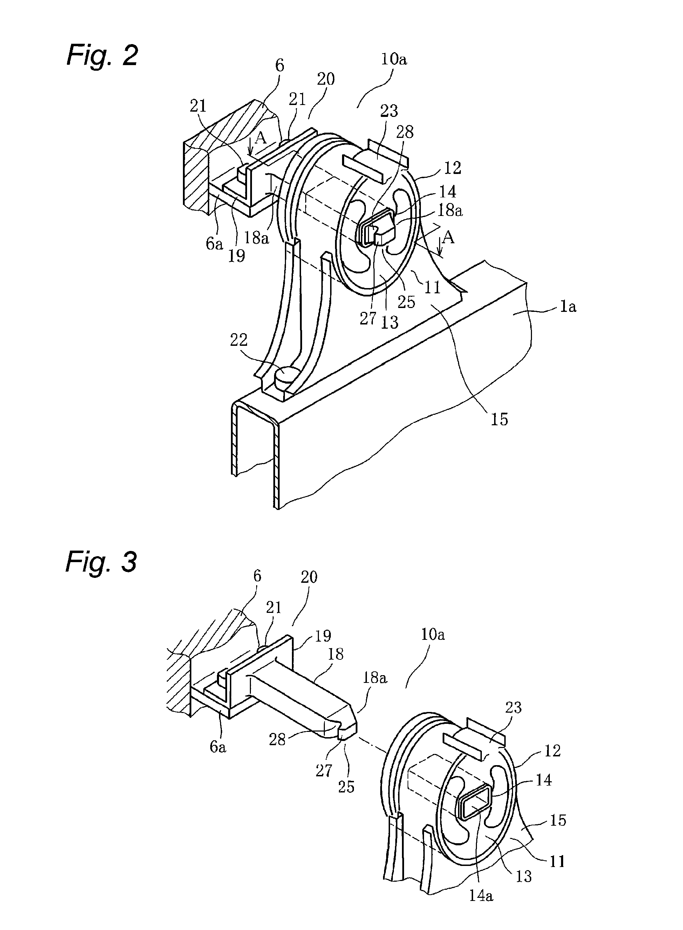

As shown in Figs. 2 and 3, the engine side mounting apparatus 10a includes a vehicle body side mounting portion 16 which is placed on the side frame member 1 a and an engine side mounting portion 20 which is placed on a transversely outboard end portion of the engine 6 (a transverse end portion of the power unit 5 which lies to face the engine 6), and both the constituent members are combined together into the engine side mounting apparatus 10a. The vehicle body side mounting portion 16 has, for example, a cylindrical insulator 11 in which an elastic member 13 such as rubber is interposed between an outer cylinder 12 and an inner cylinder 14 (corresponding to a cylindrical portion of the present patent application) and a vehicle body mounting seat 15 which is provided on the outer cylinder 12 so as to be fixed to the side frame member 1 a. The inner cylinder 14 is formed into an angular shape, and a lining 14a of a resin material such as rubber is applied to an inner circumferential surface thereof. The vehicle body mounting seat 15 is fixed to an upper surface of the side frame member 1a, which lies adjacent to the transversely outboard end portion of the engine 6 in the transverse direction, with a bolt member 22. In addition, the insulator 11 is disposed in such an attitude that an axis thereof is oriented in the transverse direction. Namely, the insulator 11 is placed in such a way that a through hole in the inner cylinder 14 is oriented so as to penetrate the inner cylinder 14 in the transverse direction. Incidentally, a stay member 23 extends from the outer cylinder 12, and an extending end portion (although not shown) of this stay member 23 is fixed to a panel member (not shown) which constitutes a circumferential wall of the engine compartment 4.

The engine side mounting portion 20 has an angular pin portion 18 which can be inserted through the inner cylinder 14 and an L-shaped engine mounting seat 19 which supports the pin portion 18 on the engine 6. The pin portion 18 may be press fitted into the inner cylinder 14. The engine mounting seat 19 is formed integrally with a base end portion of the pin portion 18 and is fixed to a flange-shaped supporting seat 6a which is formed on an end face of the transversely outboard end portion of the engine 6 with a bolt member 21. By doing so, the pin portion 18 is placed so as to project transversely outwards of the engine compartment 4 from the transversely outboard end portion of the engine 6.

Then, the transversely outboard end portion of the engine 6, that is, the end portion of the power unit 5 which lies to face the engine 6 is elastically supported on the side frame member 1 a via the insulator 11 by press fitting the pin portion 18 of the engine side mounting portion 20 in the inner cylinder 14 of the insulator 11 o the vehicle body side mounting portion 16. It is noted that a distal end portion of the pin portion 18 is formed into a tapered portion 18a in which an outside diameter decreases gradually as it extends towards a distal end thereof. By forming the distal end portion in such a way, the pin portion 18 is formed into a shape which facilitates the press fitting of the pin portion 18 into the inner cylinder 14 of the insulator 11.

The same construction as that of the engine side mounting apparatus 10a is adopted for the transmission side mounting apparatus 10b, whereby an end portion of the power unit 5 which lies to face the transmission 7 is elastically supported on the side frame member 1 b. Thus, the whole of the power unit 5 is elastically supported on the vehicle body 2 at the respective mounting apparatuses 10a, 10b thereof.

Further, a dislocation preventive construction is provided on each of these mounting apparatuses 10a, 10b, and this dislocation preventive construction prevents the pin portion 18 from being dislocated from the inside of the inner cylinder 14 when the vehicle is involved in a frontal offset collision. The offset collision means a collision from one of longitudinal end portions of the vehicle body 2.

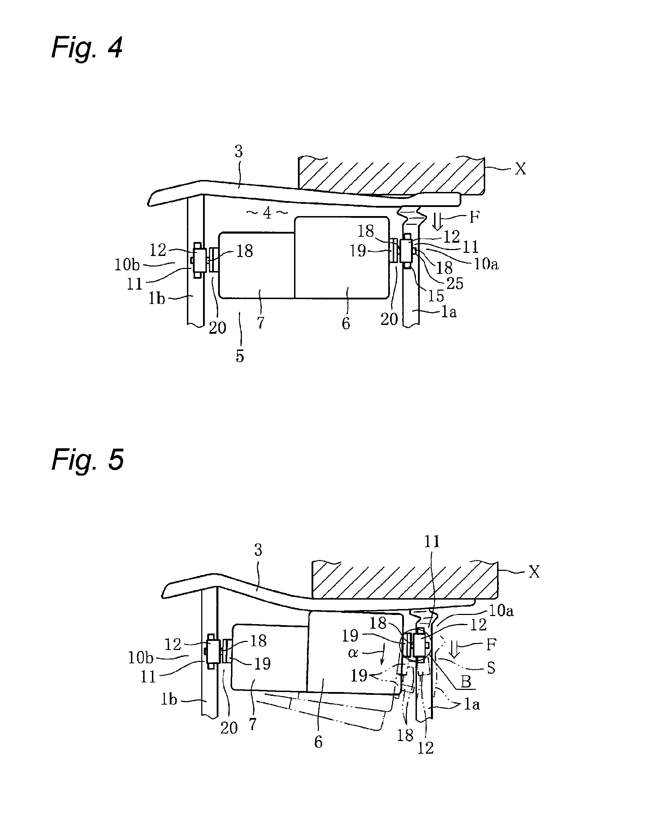

For example, when a side of the power unit 5 which faces the engine 6 is involved in a frontal offset collision, colliding load is applied to the engine 6 side of the power unit 5 in an offset fashion. Because of this, the power unit 5 is rotationally displaced towards the passenger compartment T about the mounting apparatus 10b of the power unit 5 which lies to face the transmission 7 as a fulcrum (refer to Fig. 5). As this occurs, the engine 6 side end portion of the power unit 5 and the insulator 11 are displaced relatively in directions in which they are separated from each other, and therefore, the pin portion 18 is dislocated from the inside of the inner cylinder 14 in the insulator 11 in association with the rotational displacement of the power unit 5, leading to a situation in which the power unit 5 comes off in an early stage of the collision. However, in this embodiment, by using the dislocation preventive construction in which the shape of the pin portion 18 is devised, the pin portion 18 is prevented from being dislocated from the inner cylinder 14, whereby the power unit 5 is prevented from coming off in the early stage of the collision.

Hereinafter, the dislocation preventive construction of this embodiment will be described in detail. As shown in Figs. 2 and 3, a claw-shaped portion 25 is formed at the distal end portion of the pin portion 18. The pin portion 18 is formed in such a way as to be situated further transversely outwards than the inner cylinder 14 in such a state that the pin portion 18 is inserted through the inner cylinder 14. The claw-shaped portion 25 may be formed in such a way as to be situated further transversely outwards than the inner cylinder 14 in the state that the pin portion 18 is inserted through the inner cylinder 14. In addition, a claw portion is formed on the claw-shaped portion 25, and this claw portion projects from the distal end portion of the pin portion 18 in the same direction as that in which the colliding load is inputted, that is, towards the rear of the vehicle body 2 (here, towards the passenger compartment T) within a radial sectional (an angular sectional) range of the pin portion 18.

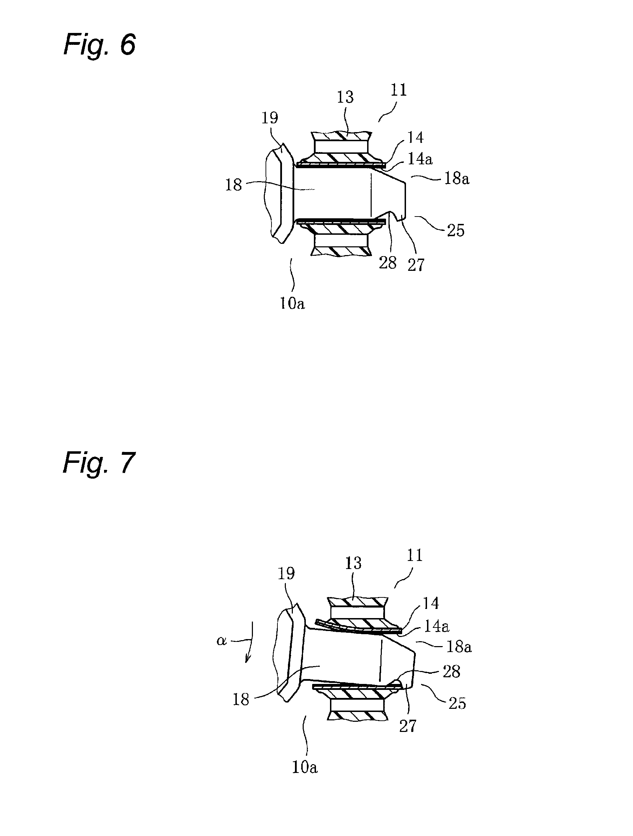

Specifically as shown also in Figs. 2, 3, 6 and 7, the claw-shaped portion 25 is made up of the claw portion having a projecting portion 27 which is formed at the distal end portion of the pin portion 18 and a recess portion 28 which is formed in a transversely inner side of a base end portion of the projecting portion 27, that is, the claw portion which is integrated with the pin portion 18. To describe this in detail, the projecting portion 27 employs, for example, an L-shaped construction in which the pin portion 18 is extended so long as to penetrate through the inner cylinder 14 and the projecting portion 27 is formed at a portion of an extended end portion of the pin portion 18 so as to project towards the rear of the vehicle body (towards the passenger compartment T) within the radial sectional (angular sectional) range of the pin portion 18. Additionally, the recess portion 28 is made up of an arc-shaped recess which is formed in a surface facing the rear of the vehicle body which is situated on the transversely inner side of the base end portion of the projecting portion 27 of the pin portion 18 in such a way as to gouge the same surface. The arc-shaped recess is formed so that the depth thereof gets gradually deeper as the recess extends towards the projecting portion 27. Then, when the pin portion 18 is displaced in a direction in which the pin portion 18 is dislocated from the inside of the inner cylinder 14 as shown in Fig. 7 in association with a rotational displacement of the power unit 5 caused by a frontal offset collision, an edge portion of a transversely outboard end portion of the inner cylinder 14 enters the recess portion 28, and the edge portion of the inner cylinder 14 is guided to a point where the edge portion of the inner cylinder 14 is superposed on the transversely inner side of the projecting portion 27. Thereby, the transversely outer edge portion of the inner cylinder 14 is brought into abutment with a transversely inner surface of the projecting portion 27.

Namely, when the pin portion 18 on the power unit 5 and the insulator 11 on the side frame member 1 a are displaced in directions in which they are separated from each other as a result of the vehicle being involved in the frontal offset collision, the projecting portion 27 is locked at the edge portion of the inner cylinder 14. This prevents the dislocation of the pin portion 18 from the inside of the inner cylinder 14.

It is noted that an outer surface of the projecting portion 27 and an inner surface of the recess portion 28 are formed so as to continue to the shape (a tapered portion) of a tapered surface of a tapered portion 18a at a distal end side of the pin portion 18 so that the insertion of the pin portion 18 into the inner cylinder 14 is not interrupted. By adopting this configuration, the function to prevent the dislocation of the pin portion 18 is compatible with the easy insertion of the pin portion 18.

This claw-shaped portion 25, which is configured as described above, prevents the dislocation of the pin member 18 , with respect to a state where the pin portion 18 is only press fitted in the inside of the inner cylinder 14.

Next, the operation of the dislocation preventing construction of the engine side mounting apparatus 10a will be described in detail which is triggered when the vehicle is involved in a front offset collision.

As shown in Fig. 1, it is assumed that the vehicle comes into collision with a barrier X, for example, at one side of the front thereof or at the engine 6 side (the right-hand side in the figure) of the power unit 5 (a frontal offset collision).

Then, as shown in Fig. 4, a colliding load F is applied to the one side of the front of the vehicle body 2, and receiving the colliding load F, the frontmost cross member 3 is deformed so as to be curved or bent, whereby a buckling deformation is caused at the front end portion of the side frame member 1 a. When the buckling deformation is developed, the engine 6 (the one side of the power unit 5) is pushed by the cross member 3 which is being deformed. Then, in the power unit 5, a rotational movement towards the rear of the vehicle body (towards the passenger compartment T) is induced in which the power unit 5 is rotated about the transmission side mounting apparatus 10b as a fulcrum in a direction indicated by α in Fig. 5.

In association with this rotational movement (the rotational displacement) of the power unit 5, the pin portion 18 of the engine side mounting apparatus 10a is displaced in a direction in which the pin portion 18 is dislocated from the inside of the inner cylinder 14 while being inclined towards the rear of the vehicle body as shown in Fig. 7. As this occurs, the constituent portions of the engine side mounting apparatus 10a, that is, the inner cylinder 14 and the insulator 11 are deformed in association with the movement of the pin portion 18.

Then, the projecting portion 27 and the recess portion 28, which are situated at the distal end portion of the pin portion 18, follow the movement of the pin portion 18 which is being dislocated from the inside of the inner cylinder 14 to approach the transversely outboard edge portion of the inner cylinder 14. Further, the transversely outboard edge portion of the inner cylinder 14 is introduced into the recess portion 28 as shown in Fig. 7 as a result of the pin portion 18 being inclined. Then, the transversely outboard edge portion of the inner cylinder 14 is guided to a point where it is superposed on the transversely inner surface of the projecting portion 27, that is, a point where the transversely outboard edge portion of the inner cylinder 14 comes into abutment with the transversely inner surface of the projecting portion 27.

Then, the projecting portion 27 is brought into locking engagement with the transversely outboard edge portion of the inner cylinder 14 to thereby prevent the inner portion 18 from being dislocated from the inside of the inner cylinder 14. This restriction by the projecting portion 27 prevents the dislocation of the engine 6 side end portion of the power unit 5 in the early stage of the collision, thereby making it possible to control the timing at which the power unit 5 comes off. Thus, as has been described heretofore, according to the embodiment, the apparatus can be established in which the pin portion 18 is prevented from being dislocated from the inside of the inner cylinder 14 or from the attitude in which the pin portion 18 is press fitted in the inner cylinder 14 while obviating the necessities of preparing a separate part and assembling the part only by the construction in which the claw-shaped portion 25 is formed at the distal end portion of the pin portion 18. Thereby, it is possible to prevent the early dislocation of the pin portion 18 when the vehicle is involved in the frontal offset collision by the simple and inexpensive construction.

It is possible to prevent the power unit 5 from coming off in the early stage of the collision, thereby making it possible to control the timing at which the power unit 5 comes off. In particular, since the distal portion of the claw-shaped portion 25 is caused to project towards the center of the vehicle body within the rotational sectional range of the pin portion 18, the claw-shaped portion 25 is made easy to be inserted into the inside of the cylindrical portion 14 together with the pin portion 18. Moreover, the claw-shaped portion 25 is allowed to be formed into the simple construction in which only the projecting portion 27 is formed at the distal end portion of the pin portion 18 within the radial sectional range of the pin portion 18 with the recess portion 28 formed in the transversely inner side of the base end portion of the projecting portion 27.

Furthermore, the outer surface of the projecting portion 27 and the inner surface of the recess portion 28 are made to continue to the tapered portion which constitutes the external shape of the distal end portion of the pin portion 18. Therefore, the ease with which the pin portion 18 is inserted into the cylindrical portion 14 provided by the tapered portion of the pin portion is not interrupted, whereby the prevention of dislocation of the pin portion can be compatible with the easy insertion of the pin portion 18 into the inner cylinder 14. In particular, the dislocation preventive construction for the pin portion 18 which employs the claw-shaped portion 25 is effective when the insulator 11 is displaced transversely more largely at a rear side of the insulator 11 than at a front side thereof in association with the buckling deformation of the side frame 1 a as indicated by a chain double-dashed line S in Fig. 5 (when a space between the engine side mounting portion 20 and the insulator 11 is small at a front side of the space and is increased wider at a rear side thereof than at the front side).

It is noted that the invention is not limited to the embodiment that has been described heretofore, and there will be no problem in carrying out the invention in various forms without departing from the spirit and scope of the invention. For example, in the embodiment described above, while the claw-shaped projecting portion and the arc-shaped recess portion are formed at the distal end portion of the angular pin portion, the invention is not limited thereto. Hence, the pin portion, the projecting portion and the recess portion may be formed into any other shapes. In addition, in the embodiment, while the invention is applied to the vehicle in which the power unit is accommodated in the area situated at the front of the passenger compartment, the invention is not limited thereto. Hence, the invention may be applied to a vehicle in which a power unit is accommodated in an area at the rear of a passenger compartment. Of course, the power unit is not limited to the construction in which the engine and the transmission are combined, and hence, a power unit may be adopted in which a motor or an engine is combined with a motor.

### Reference Signs List

- 2: vehicle body
- 4: engine compartment (accommodating area)
- 5: power unit
- 10a: engine side mounting apparatus (power unit mounting apparatus)
- 11: insulator
- 12: outer cylinder
- 13: elastic member
- 14: inner cylinder (cylindrical portion)
- 18: pin portion
- 18a: tapered portion
- 25: claw-shaped portion
- 27: projecting portion
- 28: recess portion.

## Claims

1. A power unit mounting apparatus for supporting both transverse end portions of a power unit (5) in a vehicle transverse direction to sidle frames (1a, 1b), the power unit mounting apparatus comprising:
a pin portion (18), provided at an end portion of the power unit (5) in the vehicle transverse direction, and projecting outward in the vehicle transverse direction; and an insulator (11) elastically supporting the pin portion (18),
wherein a cylindrical portion (14) through which the pin portion (18) is inserted is provided in the insulator (11),
**characterised in that** a claw-shaped portion (25) is formed at a distal end portion of the pin portion (18).

2. The power unit mounting apparatus according to claim 1,
wherein the pin portion (18) is formed so as to be disposed outward in the vehicle transverse direction than the cylindrical portion (14) in a state where the pin portion (18) is inserted through the cylindrical portion (14).

3. The power unit mounting apparatus according to claims 1 or 2,
wherein the claw-shaped portion (25) is configured to be engaged with an outer edge portion of the cylindrical portion (14) in the vehicle transverse direction when the pin portion (18) and the insulator (11) are relatively displaced so as to separate from each other in a collision of the vehicle.

4. The power unit mounting apparatus according to any one of claims 1 to 3,
wherein the claw-shaped portion (25) includes a projecting portion (27), and
wherein a distal end portion of the projecting portion (27) projects in a vehicle longitudinal direction within a range of a radial section of the pin portion (18).

5. The power unit mounting apparatus according to claim 4,
wherein a recess portion (28) is formed in the claw-shaped portion (25) at an inner portion with respect to a base portion of the projecting portion (27) in the vehicle transverse direction, and
wherein a depth of the recess portion (28) is increased towards the projecting portion (27).

6. The power unit mounting apparatus according to claim 5,
wherein a tapered portion (18a) in which an outside diameter thereof is decreased towards a distal end of the pin portion (18) is provided at a distal end portion of the pin portion (18), and
wherein an outer surface of the projecting portion (27) and an inner surface of the recess portion (28) are formed so as to continue to the tapered portion (18a).

7. The power unit mounting apparatus according to any one of claims 1 to 6,
wherein the pin portion (18) is press fitted into the cylindrical portion (14).

## Patentansprüche

1. Aufhängungsvorrichtung für eine Antriebseinheit zum Halten von beiden transversalen Endabschnitten einer Antriebseinheit (5) in einer Fahrzeugtransversalrichtung an Seitenrahmen (1a, 1b), wobei die Aufhängungsvorrichtung für eine Antriebseinheit aufweist:
einen Stiftabschnitt (18), der an einem Endabschnitt der Antriebseinheit (5) in der Fahrzeugtransversalrichtung vorgesehen ist und in der Fahrzeugtransversalrichtung nach außen vorsteht; und
einen Isolator (11), der den Stiftabschnitt (18) elastisch hält,
wobei ein zylindrischer Abschnitt (14), durch den der Stiftabschnitt (18) eingefügt ist, im Isolator (11) vorgesehen ist,
**dadurch gekennzeichnet, dass** ein klauenförmiger Abschnitt (25) an einem distalen Endabschnitt des Stiftabschnitts (18) ausgebildet ist.

2. Aufhängungsvorrichtung für eine Antriebseinheit nach Anspruch 1,
wobei der Stiftabschnitt (18) so ausgebildet ist, dass er in einem Zustand, wo der Stiftabschnitt (18) durch den zylindrischen Abschnitt (14) eingefügt ist, in der Fahrzeugtransversalrichtung weiter außen als der zylindrische Abschnitt (14) angeordnet ist.

3. Aufhängungsvorrichtung für eine Antriebseinheit nach Anspruch 1 oder 2,
wobei der klauenförmige Abschnitt (25) konfiguriert ist, mit einem Außenkantenabschnitt des zylindrischen Abschnitts (14) in der Fahrzeugtransversalrichtung in Eingriff zu treten, wenn der Stiftabschnitt (18) und der Isolator (11) bei einer Kollision des Fahrzeugs relativ zueinander verschoben werden, so dass sie sich voneinander trennen.

4. Aufhängungsvorrichtung für eine Antriebseinheit nach einem der Ansprüche 1 bis 3, wobei der klauenförmige Abschnitt (25) einen vorstehenden Abschnitt (27) aufweist, und
wobei ein distaler Endabschnitt des vorstehenden Abschnitts (27) in einer Fahrzeuglängsrichtung innerhalb eines Bereichs eines radialen Querschnitts des Stiftabschnitts (18) vorsteht.

5. Aufhängungsvorrichtung für eine Antriebseinheit nach Anspruch 4,
wobei ein Aussparungsabschnitt (28) im klauenförmigen Abschnitt (25) an einem inneren Abschnitt bezüglich eines Basisabschnitts des vorstehenden Abschnitts (27) in der Fahrzeugtransversalrichtung ausgebildet ist, und
wobei eine Tiefe des Aussparungsabschnitts (28) zum vorstehenden Abschnitt (27) zunimmt.

6. Aufhängungsvorrichtung für eine Antriebseinheit nach Anspruch 5,
wobei ein konischer Abschnitt (18a), dessen Außendurchmesser zu einem distalen Ende des Stiftabschnitts (18) abnimmt, an einem distalen Endabschnitt des Stiftabschnitts (18) vorgesehen ist, und
wobei eine Außenfläche des vorstehenden Abschnitts (27) und eine Innenfläche des Aussparungsabschnitts (28) so ausgebildet sind, dass sie sich zum konischen Abschnitt (18a) fortsetzen.

7. Aufhängungsvorrichtung für eine Antriebseinheit nach einem der Ansprüche 1 bis 6, wobei der Stiftabschnitt (18) in den zylindrischen Abschnitt (14) eingepresst ist.

## Revendications

1. Dispositif de montage d'unité de puissance destiné à supporter à supporter les deux parties d'extrémités transversales d'une unité de puissance (5) dans une direction transversale de véhicule entre des longerons (la, 1b), ledit dispositif de montage d'unité de puissance comprenant :
une section de broche (18) prévue sur une partie d'extrémité de l'unité de puissance (5) dans la direction transversale du véhicule, et faisant saillie vers l'extérieur dans la direction transversale du véhicule ; et un isolant (11) supportant élastiquement la section de broche (18),
une section cylindrique (14) dans laquelle la section de broche (18) est insérée étant prévue dans l'isolant (11),
**caractérisé en ce qu'**une section en forme de griffe (25) est formée sur une partie d'extrémité distale de la section de broche (18).

2. Dispositif de montage d'unité de puissance selon la revendication 1, où la section de broche (18) est formée de manière à ressortir extérieurement dans la direction transversale du véhicule par rapport à la section cylindrique (14) dans un état où la section de broche (18) est insérée dans la section cylindrique (14).

3. Dispositif de montage d'unité de puissance selon la revendication 1 ou la revendication 2, où la section en forme de griffe (25) est prévue pour avoir prise sur une partie de bord extérieur de la section cylindrique (14) dans la direction transversale du véhicule quand la section de broche (18) et l'isolant (11) subissent un déplacement relatif séparant l'une de l'autre lors d'une collision du véhicule.

4. Dispositif de montage d'unité de puissance selon l'une des revendications 1 à 3, où la section en forme de griffe (25) comprend une section en saillie (27), et où une partie d'extrémité distale de la section en saillie (27) s'étend dans une direction longitudinale du véhicule à l'intérieur d'une plage d'une section radiale de la section de broche (18).

5. Dispositif de montage 'd'unité de puissance selon la revendication 4, où un renfoncement (28) est formé dans la section en forme de griffe (25) sur une partie intérieure par rapport à une partie de base de la section en saillie (27) dans la direction transversale du véhicule, et où la largeur du renfoncement (28) augmente dans la direction de la section en saillie (27).

6. Dispositif de montage d'unité de puissance selon la revendication 5, où une section de chanfrein (18a) dont le diamètre extérieur décroît vers une extrémité distale de la section de broche (18) est prévue dans une partie d'extrémité distale de la section de broche (18), et où une surface extérieure de la section en saillie (27) et une surface intérieure du renfoncement (28) sont formées de manière à se prolonger par la section de chanfrein (18a).

7. Dispositif de montage d'unité de puissance selon l'une des revendications 1 à 6, où la section de broche (18) est ajustée à la presse dans la section cylindrique (14).
